# EUROPÄISCHE PATENTSCHRIFT

(11) **EP 2 441 993 B1**
(45) Veröffentlichungstag und Bekanntmachung des Hinweises auf die Patenterteilung: **22.04.2015**
(21) Anmeldenummer: 11183437.0
(22) Anmeldetag: 30.09.2011
(51) Int. Cl.: F16K 24/04, F16K 24/06, B60K 15/035, F16K 17/36, F16K 24/00

(54) **Ventil zum Be- und Entlüften eines Tanks**
Valve for aerating and ventilating a tank
Soupape d'alimentation en air et d'évacuation de l'air d'un réservoir

(30) Priorität: 15.10.2010 DE 202010014283 U
(43) Veröffentlichungstag der Anmeldung: 18.04.2012
(73) Patentinhaber: Makita Corporation, Anjo, Aichi 446-8502 (JP)
(72) Erfinder: Ziegs, Carsten, 22147 Hamburg (DE)
(74) Vertreter: RGTH

(56) Entgegenhaltungen:
- EP-A1- 1 686 300
- US-A- 2 405 736
- US-A- 2 660 611
- US-A- 4 352 364

## Beschreibung

Die vorliegende Erfindung betrifft ein Ventil für das Be- und Entlüften eines Tanks mit einem Schließelement, das in einem Schließzustand gegen einen Ventilsitz dichtend ansitzt und in einem Öffnungszustand aus dem Ventilsitz gehoben ist, wobei ein schwerkraftbewegliches Sperrelement vorgesehen ist, durch das das Schließelement wenigstens im Schließzustand festsetzbar ist.

Ventile für das Be- und Entlüften eines Tanks, in dem der Kraftstoff für einen Motor eines Arbeitsgerätes aufgenommen ist, sind insbesondere dann erforderlich, wenn der Tank relativ zur Schwerkraft derart gekippt werden kann, dass Kraftstoff aus einer notwendigen Belüftungsöffnung des Tanks zu seiner Be- und Entlüften auslaufen kann. Derartige Ventile finden für Tanks Anwendung, die für handgehaltene Motorgeräte wie beispielsweise ein Trennschleifer oder eine Säge oder beispielsweise für Geräte zur Garten- und Landschaftspflege vorgesehen sind, die handgeführt werden und folglich aus einer Neutrallage gekippt werden können, etwa um 90°.

Jedoch ist ein Be- und Entlüften des Tanks erforderlich; beispielsweise kann im Tank ein Unterdruck entstehen, wenn aus dem Tank Kraftstoff über eine Kraftstoffleitung gesaugt wird. Ferner kann im Tank ein Überdruck entstehen, beispielsweise wenn der Tank und der Kraftstoff im Tank insbesondere durch die Inbetriebnahme des Motorgerätes, Änderung der Außentemperatur oder direkte Sonneneinstrahlung aufgeheizt werden. Folglich stellt sich das Problem einer Be- und Entlüftung des Tanks zur Ventilation, wobei das Ventil so ausgeführt sein muss, dass kein Kraftstoff aus dem Tank auslaufen kann, wenn dieser aus seiner Neutrallage gekippt wird.

### STAND DER TECHNIK

Aus der DE 197 05 440 A1 ist ein Ventil für das Be- und Entlüften eines Tanks mit einem Schließelement bekannt, bei welchem Ventil das Schließelement plattenartig ausgeführt ist und ein oberseitiges Dichtelement aufweist, und wenn das Schließelement mit dem Dichtelement gegen einen Ventilsitz gedrückt wird, kann ein Entlüftungskanal geschlossen werden. Hebt das Schließelement mit dem Dichtelement wieder vom Ventilsitz ab, ist der Entlüftungskanal wieder frei gegeben. Folglich kann das Schließelement im Schließzustand gegen den Ventilsitz dichtend ansitzen und im Öffnungszustand aus dem Ventilsitz gehoben werden, wobei ein schwerkraftbewegliches Sperrelement in Gestalt einer Schließbetätigungskugel vorgesehen ist, durch die das Schließelement wenigstens im Schließzustand gegen den Ventilsitz festsetzbar ist. Die Betätigungskugel ist auf einem kegelförmigen Lager geführt, und wenn die Betätigungskugel schwerkraftbedingt aus einer Mittellage ausgelenkt wird, wandert diese den Kegel des Lagers hoch und bewegt dadurch das an die Betätigungskugel angrenzende Schließelement gegen den Ventilsitz.

Aus der DE 200 13 293 U1 ist ein weiteres Ventil bekannt, wobei ein Ventilkörper gegen eine Dichtfläche dichtend zur Anlage festsetzbar ist, und wobei ein schwerkraftbewegliches Sperrelement wiederum in Gestalt einer Kugel vorgesehen ist. Durch eine Lageänderung des Ventils verändert sich auch die Lage des kugelförmigen Sperrelementes, das in einem Kegel geführt ist, und durch die Auslenkung des kugelförmigen Sperrelementes wandert dieses den Kegel hoch und drückt den Ventilkörper gegen die Dichtfläche.

In der US 2 660 611 A wird ein Ventil zum Be- und Entlüften einer Batterie beschrieben. Das Ventil weist ein Schließelement und ein schwerkraftbewegliches Sperrelement, durch welches das Schließelement zumindest im Schließzustand festsetzbar ist, auf. Das Schließelement weist eine Ventilnadel auf, die sich mit einem Schaftabschnitt durch das Sperrelement hindurch erstreckt. An einem Endbereich des Schaftabschnittes des Schließelementes ist eine Schulter ausgebildet, um welche herum das Sperrelement schwenkbar ist, wobei hierfür ein Ende des Schaftabschnittes, welches an die Schulter angrenzt, relativ zu dem restlichen Schaftabschnitt verschwenkt werden kann.

Bei Ventilen mit einem schwerkraftbeweglichen Sperrelement, das als Kugel ausgeführt ist und in einer Kegelfläche läuft, kann der Nachteil entstehen, dass das Sperrelement zwischen dem angrenzenden Schließelement und dem Element zur Bildung der Kegelfläche verklemmen kann. Folglich verbleibt das Schließelement im Schließzustand, indem dieses gegen den Ventilsitz ansitzt. Die Auslenkung des kugelförmigen Sperrelementes aus der Mittellage ist nicht begrenzt, und sollte beispielsweise durch eine Schlageinwirkung in Auslenkungsrichtung des Sperrelementes eine Krafteinwirkung auf die Kugel erfolgen, so kann die Verklemmung eingeleitet werden. Das kugelförmige Sperrelement ist vorzugsweise aus einem Stahlwerkstoff mit einer hohen Dichte ausgebildet, um eine Mindestschließkraft gegen das Schließelement bewirken zu können. Hingegen können Umbauteile und insbesondere das Schließelement mit einem Dichtring, der in den Ventilsitz dichtend ansitzen kann, aus Kunststoff ausgebildet sein und damit eine Nachgiebigkeit bilden, sodass diese Nachgiebigkeit eine Verspannung der Kugel in der Kraftflusskette ermöglichen kann, die ein Zurückführen der Kugel in den Öffnungszustand verhindert.

Ferner weisen Ventile für das Be- und Entlüften für Tanks, die ein kugelförmiges Sperrelement besitzen, eine aufwendige Herstellung auf, da eine Vielzahl von Einzelteilen notwendig ist, und es sind Maßnahmen erforderlich, das freibewegliche Sperrelement zwischen dem Kegelflächenkörper und dem Schließelement so zu positionieren, dass eine sichere Funktion des Ventils gesichert ist.

### DARSTELLUNG DER ERFINDUNG: AUFGABE, LÖSUNG, VORTEILE

Es ist daher die Aufgabe der vorliegenden Erfindung, ein Ventil für das Be- und Entlüften eines Tanks zu schaffen, das die Nachteile des vorstehend bezeichneten Standes der Technik überwindet, welches eine sichere Funktion auch bei einem Einsatz unter rauhen Bedingungen mit Stoßbelastungen sicherstellt und welches einfach aufgebaut ist.

Diese Aufgabe wird ausgehend von einem Ventil für das Be- und Entlüften eines Tanks gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Sperrelement am Schließelement beweglich aufgenommen ist.

Die Erfindung geht dabei von dem Gedanken aus, das Sperrelement so auszuführen, dass dieses am Schließelement beweglich aufgenommen ist. Daraus ergibt sich eine Alternative, eine in Funktion und Zuverlässigkeit verbesserte Lösung zur Ausführung des Sperrelementes als Kugel, die mit einer Kegelfläche zusammenwirkt. Das Sperrelement ist erfindungsgemäß am Schließelement so aufgenommen, dass das Sperrelement das Schließelement in Abhängigkeit von der Wirkrichtung der Schwerkraft im Schließzustand des Schließelementes festsetzen kann. Die bewegliche Aufnahme des Sperrelementes am Schließelement beschreibt nach dem Wortgebrauch der vorliegenden Erfindung ebenfalls eine Aufnahme des Sperrelementes durch das Schließelement beziehungsweise im Schließelement.

Vorzugsweise ist das Sperrelement am Schließelement geführt angeordnet, insbesondere schwenkbar mit einer Schwenkbewegung um einen zum Schließelement festen Schwenkpunkt. Die Schwenkbewegung des Sperrelementes wird schwerkraftbedingt ausgelöst und erfolgt relativ in Bezug auf die Anordnung des Schließelementes. Folglich kann das Sperrelement derart am Schließelement verschwenken, dass das Schließelement durch das Sperrelement im Schließzustand festsetzbar ist. Der zum Schließelement feste Schwenkpunkt kann im Körper des Schließelementes oder vorzugsweise außerhalb des Schließelementes angeordnet sein. Das Schließelement ist in einer Hubachse beweglich im Ventil aufgenommen, sodass eine Bewegung des Schließelementes in Richtung zur Hubachse zwischen dem Schließzustand und dem Öffnungszustand möglich ist. Der Schwenkpunkt, um den das Sperrelement eine Schwenkbewegung ausführen kann, liegt vorzugsweise auf der Hubachse des Schließelementes. Insbesondere ist der Schwenkpunkt der Schwenkbewegung des Sperrelementes der Seite des Schließelementes abgewandt, die in Richtung zum Ventilsitz angeordnet ist und mit diesem dichtend zusammenwirkt.

Es hat sich als besonders vorteilhaft herausgestellt, wenn das Sperrelement kegelförmig ausgebildet ist. Insbesondere ist es vorteilhaft, wenn das Sperrelement im Wesentlichen die Gestalt eines Kegelstumpfes aufweist. Jedenfalls kann das Sperrelement eine kegelförmige und insbesondere eine kegelstumpfförmige Mantelfläche aufweisen.

Zur Funktion des Schließelementes kann dieses eine Ventilnadel umfassen, die sich mit einem Schaftabschnitt durch das Sperrelement hindurch erstreckt. Mit Vorteil kann das Schließelement mehrteilig ausgebildet sein, und ein Teil des Schließelementes wird insbesondere durch die Ventilnadel gebildet. Um das Sperrelement am Schließelement aufzunehmen, kann das Sperrelement einen Durchgangsbereich aufweisen, durch den sich die Ventilnadel mit einem Schaftabschnitt hindurch erstreckt. Damit ist das kegelstumpfförmige Sperrelement hülsenförmig, wobei die Mantelfläche des Sperrelementes, jedoch vorzugsweise auch die innere Oberfläche des Sperrelementes, kegelförmig bzw. hohlkegelförmig ausgebildet sein kann.

Das Schließelement kann als einen weiteren Teil einen Führungsteller mit einer Kugelpfanne aufweisen, wobei das Sperrelement vorzugsweise in der Kugelpfanne beweglich geführt ist. Mit noch weiterem Vorteil kann die Ventilnadel einen Führungskopf mit einer kugelförmigen Führungsfläche aufweisen, wobei das Sperrelement zusätzlich auf der kugelförmigen Führungsfläche geführt ist, um ein Gegenlager zur Führung in der Kugelpfanne zu bilden. Durch die Führung des Sperrelementes einerseits in der Kugelpfanne des Führungstellers und andererseits über die kugelförmige Führungsfläche des Führungskopfes der Ventilnadel entsteht eine Zwangsführung des Sperrelementes um den Schwenkpunkt. Insbesondere bildet der Schwenkpunkt den Mittelpunkt der virtuellen Kugeloberfläche, die abschnittsweise durch die Kugelpfanne im Führungsteller nachgebildet ist. Ebenfalls abschnittsweise bildet die kugelförmige Führungsfläche im Führungskopf der Ventilnadel einen Kugeloberflächenabschnitt, wobei die Kugel ebenfalls einen Mittelpunkt besitzt, der in den Schwenkpunkt fällt, jedoch mit einem kleineren Radius. Wirkt nun die Schwerkraft in einer Richtung, die von der Hubachse des Schließelementes abweicht, so kann das Sperrelement um den Schwenkpunkt herum verschwenken, um das Schließelement im Schließzustand festzusetzen.

Insbesondere kann das Schließelement eine Symmetrieachse und das Sperrelement eine Symmetrieachse aufweisen, wobei sich das Sperrelement im Öffnungszustand in einer Mittellage befindet und beide Symmetrieachsen wenigstens annähernd ineinander liegen und im Schließzustand einen Winkel zueinander einschließen, wenn das Sperrelement durch die Einwirkung der Schwerkraft aus der Mittellage herausgeführt ist. Der Wechsel vom Öffnungszustand in den Schließzustand wird folglich dadurch erst hervorgerufen, wenn das Ventil relativ zur Wirkrichtung der Schwerkraft verkippt wird. Die Wirkrichtung der Schwerkraft verläuft dabei in Richtung der Symmetrieachse des Schließelementes, wenn sich dieses im Öffnungszustand befinden soll. Wird die Lage des Ventils gekippt, so folgt das Sperrelement aufgrund seiner Schwerkraft der Wirkrichtung der Schwerkraft, und das Sperrelement wird seitlich, das heißt senkrecht zur Symmetrieachse des Schließelementes, ausgelenkt. Das Sperrelement besitzt auf der Seite, die in Richtung zum Führungsteller weist, einen konvexen Oberflächenabschnitt, um in der Kugelpfanne abzugleiten. Ferner besitzt das Sperrelement auf der in Richtung zum Führungskopf weisenden Seite einen konkaven Oberflächenabschnitt, mit dem das Sperrelement auf der Führungsfläche im Führungskopf der Ventilnadel abgleiten kann. Damit erfolgt die Doppelführung des Sperrelementes einerseits über die Kugelpfanne und andererseits über die kugelförmige Führungsfläche.

Das Ventil kann ein Gehäuse aufweisen, in dem das Schließelement und das Sperrelement aufgenommen sind, wobei das Festsetzen des Schließelementes im Schließzustand durch eine Anlage des Sperrelementes gegen das Gehäuse in wenigstens einem Anlagepunkt erfolgt. Der Anlagepunkt im Gehäuse des Ventils erfolgt auf der Innenseite des Gehäuses, und das Sperrelement gelangt bei hinreichender Auslenkung aus der Mittellage im Anlagepunkt zur Anlage gegen die Innenseite des Gehäuses. Der Anlagepunkt kann auch als Linienberührung ausgebildet sein, und das kegelförmige Sperrelement liegt innenseitig im zylinderförmigen Gehäuse des Ventils an. Im Anlagepunkt stützt sich dabei das Sperrelement gegen einen oberseitigen Bereich des Gehäuses des Ventils ab, und die Einheit aus Ventilnadel, Führungsteller und dem Sperrelement ist so festgesetzt, dass sich das Schließelement im dichtenden Sitz des Ventilsitzes befindet. Solange die Auslenkung des Sperrelementes erhalten bleibt, kann die Ventilnadel des Schließelementes aus dem Ventilsitz nicht abheben. Im Ergebnis bleibt das Ventil geschlossen, und Kraftstoff kann den Tank nicht unerwünscht verlassen.

Der besondere Vorteil, der durch die Anlage des Sperrelementes im Anlagepunkt innenseitig im Gehäuse des Ventils entsteht, ist eine definierte Schließposition des Schließelementes im Ventilsitz, ohne dass eine weitere Auslenkung des Sperrelementes über den Anlagepunkt hinaus möglich ist. Damit wird vermieden, dass sich durch ein zu starkes Auslenken des Sperrelementes das Sperrelement im Kraftfluss mit dem Schließelement gegen den Ventilsitz verspannen kann, wie dies bei den Lösungen mit einer Kugel als Sperrelement gemäß dem Stand der Technik möglich ist.

Insbesondere können das Schließelement und das Sperrelement eine Einheit mit einem Höhenmaß in Symmetrieachsenrichtung des Ventils bilden, welches Höhenmaß bei schwerkraftbedingter Auslenkung des Sperrelementes aus der Mittellage größer ist als bei Anordnung des Sperrelementes in Mittellage. Dieses Höhenmaß kann dabei derart genau eingemessen werden, dass ein Verspannen oder Verklemmen des Sperrelementes im Gehäuse des Ventils im Anlagepunkt vermieden wird.

Gemäß einer weiteren die Erfindung verbessernden Maßnahme kann das Sperrelement einen Hohlkegel aufweisen, durch den sich der Schaftabschnitt erstreckt, sodass das Sperrelement auf dem Schaftabschnitt taumelbeweglich ist. Befindet sich das Sperrelement in der ausgelenkten Lage, sodass die Symmetrieachse des Sperrelementes mit der Symmetrieachse des Schaftabschnittes einen Winkel einschließt, so liegt die kegelförmige Mantelfläche des Sperrelementes in einer Linie innenseitig am Gehäuse des Ventils an. Die Innenseite des Gehäuses des Ventils weist eine Zylinderform auf, und der Schaftabschnitt erstreckt sich entlang seiner Symmetrieachse zentrisch durch das zylinderförmige Gehäuse. Folglich kann das Sperrelement einen Hohlkegel aufweisen, und die Berührungslinie zwischen der Oberfläche des Hohlkegels innenseitig im Sperrelement und die Berührungslinie zwischen dem Sperrelement und der Innenseite des Gehäuses des Ventils können parallel verlaufend ausgebildet sein. Insbesondere kann die Dimensionierung des Sperrelementes mit dem innenseitigen Hohlkegel so bemessen sein, dass das Sperrelement sogar lediglich auf dem Schaftabschnitt anliegt, und nicht in einer Linienberührung gegen die Innenseite des Gehäuses anliegt. Dabei kann jedoch der Anlagepunkt zwischen dem Sperrelement und der Innenseite des Gehäuses des Ventils erhalten bleiben.

Ein besonderer Vorteil wird dadurch gebildet, dass der Führungsteller auf der Ventilnadel aufgeschraubt ist, sodass der Abstand der Kugelpfanne zur Führungsfläche des Führungskopfes der Ventilnadel über eine Schraubverstellung des Führungstellers auf der Ventilnadel verstellbar ist. Die Schraubverstellung kann ein Gewinde, insbesondere ein Feingewinde umfassen, und der Führungsteller ist auf der Ventilnadel aufgeschraubt. Dabei können Sicherungsmittel vorgesehen sein, um eine selbsttätige Verstellung der Aufschraubsituation des Führungstellers auf der Ventilnadel zu unterbinden. Der Führungsteller wird dabei so weit auf die Ventilnadel aufgeschraubt, bis eine im Wesentlichen spielfreie Führung des Sperrelementes zwischen der Kugelpfanne und der Führungsfläche gebildet ist.

Gemäß der vorliegenden Erfindung kann der Tank für ein handgehaltenes Motorgerät vorgesehen sein, wobei das Ventil am Tank derart angeordnet ist, dass sich das Sperrelement in der Mittellage befindet, wenn das Motorgerät in einer Neutrallage gehalten ist und wobei das Sperrelement aus der Mittellage herausgelangt, wenn das Motorgerät die Neutrallage verlässt.

### KURZE BESCHREIBUNG DER ZEICHNUNGEN

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
Figur 1 das erfindungsgemäße Ventil für das Be- und Entlüften eines Tanks in einer Neutrallage, in der das Schließelement in einem Öffnungszustand angeordnet ist und
Figur 2 das Ventil gemäß Figur 1, wobei das Ventil aus der Neutrallage 90° verschwenkt ist, sodass das Sperrelement in einer Sperrstellung angeordnet ist, in der das Sperrelement das Schließelement im Schließzustand festsetzt.

### BEVORZUGTE AUSFÜHRUNGSFORM DER ERFINDUNG

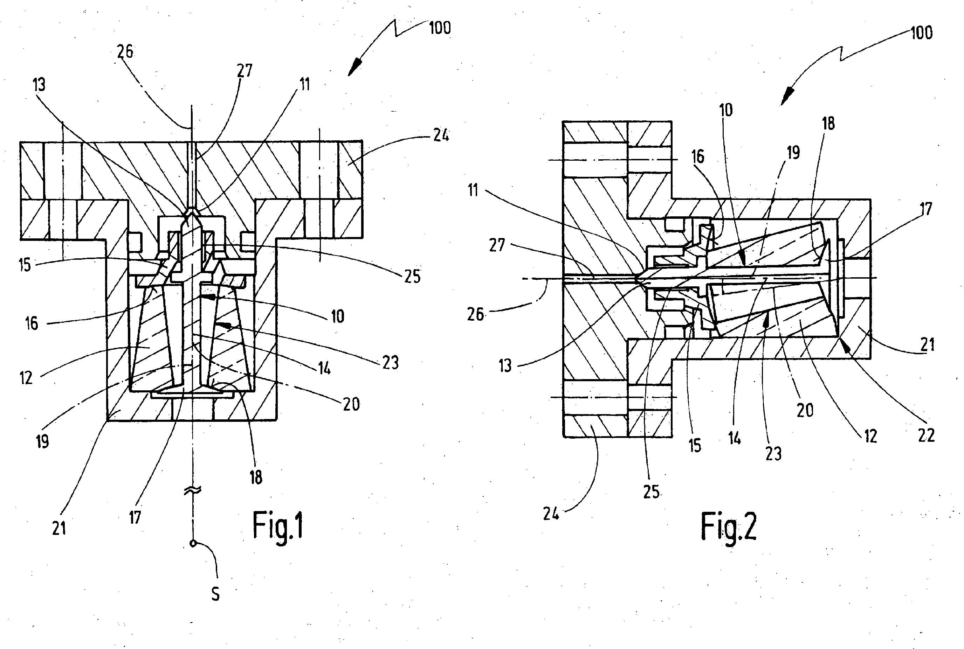

Gleiche oder ähnliche Ausgestaltungen, Elemente oder Merkmale sind in den Figuren 1 und 2 mit identischen Bezugszeichen versehen. Die Beschreibung der Figuren 1 und 2 erfolgt nachfolgend in Zusammenschau.

Zur Vermeidung von Wiederholungen beziehen sich die nachfolgenden Erläuterungen hinsichtlich der Ausgestaltungen, Merkmale und Vorteile der vorliegenden Erfindung (soweit nicht anderweitig angegeben) auf sämtliche in den Figuren 1 und 2 dargestellten exemplarischen Ausgestaltungen eines Ventils 100 gemäß der vorliegenden Erfindung.

In den Figuren 1 und 2 ist ein Ventil 100 für das Be- und Entlüften eines Tanks dargestellt. In Figur 1 befindet sich das Ventil in einer Neutrallage, und in Figur 2 ist das Ventil gegenüber der Neutrallage um 90° im Uhrzeigersinn gekippt.

Das Ventil 100 besitzt ein Schließelement 10, das mehrteilig aufgebaut ist, und im Wesentlichen eine Ventilnadel 13 umfasst, die gegen einen Ventilsitz 11 in einer Ventilplatte 24 des Ventils 100 dichtend zur Anlage gelangen kann. In der Ventilplatte 24 ist ein Entlüftungskanal 27 eingebracht, und wenn die Spitze der Ventilnadel 13 gegen den Ventilsitz 11 dichtend ansitzt, ist der Entlüftungskanal 27 geschlossen. Figur 1 zeigt die Ventilnadel 13 in einem Öffnungszustand, sodass der Tank über den Entlüftungskanal 27 ventilieren kann, wohingegen Figur 2 die Ventilnadel 13 in einem Schließzustand zeigt, sodass der Entlüftungskanal 27 geschlossen ist.

Ein Sperrelement 12 ist erfindungsgemäß durch das Schließelement 10 aufgenommen, wobei das Sperrelement 12 in Gestalt eines Kegelstumpfes ausgeführt ist und die Aufnahme am Schließelement 10 ist derart gestaltet, dass das Sperrelement 12 eine Schwenkbewegung um einen Schwenkpunkt S, der auf der Hubachse 26 liegt, ausführen kann. Die Führung des Sperrelementes 12 am Schließelement 10 erfolgt über einen Führungsteller 15, der eine Kugelpfanne 16 aufweist. Gegen die Kugelpfanne 16 ist das Sperrelement 12 schwenkbeweglich geführt, wobei ein Gegenlager durch einen Führungskopf 17 gebildet ist, der eine Führungsfläche 18 aufweist, die der Oberfläche der Kugelpfanne 16 im Führungsteller 15 gegenüberliegt. Die Verbindung zwischen dem Führungsteller 15 und der Ventilnadel 13 umfasst eine Schraubverstellung 25, und der Führungsteller 15 kann auf der Ventilnadel 13 verstellt werden. Die Verstellung des Führungstellers 15 gegenüber der Ventilnadel 13 erfolgt so weit, bis das schwerkraftbewegliche Sperrelement 12 möglichst freigängig geführt ist.

In der in Figur 1 gezeigten Neutrallage des Ventils 100 liegt die Symmetrieachse 20 des Sperrelements 12 in der Symmetrieachse 19 des Schließelementes 10. Wird das Ventil 100 gekippt, wie dies in Figur 2 dargestellt ist, so schließen die Symmetrieachsen 19 und 20 einen Winkel zueinander ein, da das Sperrelement 12 aufgrund der Einwirkung der Schwerkraft aus der Mittellage herausgeführt ist. Schließlich gelangt das Sperrelement 12 in einem Anlagepunkt 22 gegen ein Gehäuse 21 des Ventils 100, wodurch die Einheit aus dem Schließelement 10 und dem Sperrelement 12 ein Höhenmaß erreicht, das einen schließenden Sitz der Ventilnadel 13 im Ventilsitz 11 bewirkt. Erst wenn das Ventil 100 wieder in Richtung zur Neutrallage zurückverschwenkt wird und sich das Sperrelement 12 folglich in Mittellage befindet, kann die Ventilnadel 13 wieder aus dem Ventilsitz 11 abheben, um den Entlüftungskanal 27 in der Ventilplatte 24 freizugeben.

Um die Taumelbewegung des Sperrelementes 12 auf der Ventilnadel 13 nicht zu begrenzen, besitzt das Sperrelement 12 einen Hohlkegel 23, durch den sich der Schaftabschnitt 14 der Ventilnadel 13 hindurch erstreckt. und der so bemessen ist, dass keine seitliche Kraft auf den Schaftabschnitt 14 wirkt. Befindet sich das Sperrelement 12 in der ausgelenkten Lage, kann der Schaftabschnitt 14 innenseitig am Hohlkegel 23 des Sperrelementes 12 gerade anliegen ohne Druckkraft aufzunehmen.

Durch die Führungsflächen 17, 18 wird das Ventil bei Rückführung in die Normallage auch bei herrschendem Tankinnendruck aufgrund der Sperrelement-Schwerkraft geöffnet und der Tank drucklos entlüftet.

Im Ergebnis wird ein Ventil 100 für das Be- und Entlüften eines Tanks eines handgehaltenen Motorgerätes geschaffen, mit welchem Ventil 100 der Vorteil erreicht wird, dass ein übermäßiges Verspannen eines schwerkraftbeweglichen Sperrelementes 12 aus einer Mittellage heraus vermieden ist. Ist das Sperrelement 12 einmal im Anlagepunkt 22 innenseitig im Gehäuse 21 zur Anlage gelangt, kann die Ventilnadel 13 bereits vollständig dichtend im Ventilsitz 11 ansitzen. Dennoch kann bei Rückbewegung des Ventils 100 in die Neutrallage ein einfaches Lösen des Sperrelementes 12 aus der Anlage gegen das Gehäuse 21 erfolgen, und das Ventil 100 kann in beliebig häufiger Wiederholung zwischen dem Schließzustand und dem Öffnungszustand hin- und herschalten. Die Ventilplatte 24 kann als Bestandteil des Gehäuses des Tankes ausgebildet sein, oder die Ventilplatte 24 und insbesondere das Gehäuse 21 sind Einzelteile, die an geeigneter Stelle im Tank des Motorgerätes eingesetzt werden. Vorzugsweise sind die Ventilplatte 24 und das Gehäuse 21 aus einem Kunststoffmaterial ausgebildet, wobei das schwerkraftbewegliche Sperrelement 12 bevorzugt aus einem Werkstoff hoher Dichte, z.B. Stahl oder einem Metall oder Kunststoff höherer Dichte als Stahl besteht, um eine ausreichende Einwirkung der Schwerkraft auf das Sperrelement 12 zu erzielen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein. Das schwerkraftbewegliche Sperrelement kann rotationssymmetrisch um seine Symmetrieachse 20 ausgeführt sein, wobei das Sperrelement 12 auch aus einer symmetrisch gleichverteilt um die Symmetrieachse 20 ausgeführte Einzelteile gebildet sein kann. Das Schließelement 10 kann alternativ zur Ausführung einer Ventilnadel 13 auch einen Tellersitz aufweisen, mit dem das Schließelement 10 gegen den Ventilsitz 11 dichtend zur Anlage gelangen kann.

## Patentansprüche

1. Ventil (100) für das Be- und Entlüften eines Tanks mit einem Schließelement (10), das in einem Schließzustand gegen einen Ventilsitz (11) dichtend ansitzt und in einem Öffnungszustand aus dem Ventilsitz (11) gehoben ist, wobei ein schwerkraftbewegliches Sperrelement (12) vorgesehen ist, durch das das Schließelement (10) wenigstens im Schließzustand festsetzbar ist, wobei das Sperrelement (12) am Schließelement (10) beweglich aufgenommen ist und wobei das Schließelement (10) eine Ventilnadel (13) umfasst, die sich mit einem Schaftabschnitt (14) durch das Sperrelement (12) hindurch erstreckt, **dadurch gekennzeichnet, dass** das Schließelement (10) einen Führungsteller (15) mit einer Kugelpfanne (16) aufweist, wobei das Sperrelement (12) in der Kugelpfanne (16) geführt ist, indem das Sperrelement (12) einen konvexen Oberflächenabschnitt aufweist, um in der Kugelpfanne (16) abzugleiten.

2. Ventil nach Anspruch 1, **dadurch gekennzeichnet, dass** das Sperrelement (12) am Schließelement (10) geführt ist, insbesondere schwenkbar mit einer Schwenkbewegung um einen zum Schließelement (10) festen Schwenkpunkt (S).

3. Ventil nach Anspruch 1 oder 2, **dadurch gekennzeichnet, dass** das Sperrelement (12) kegelförmig ausgebildet ist.

4. Ventil nach einem der vorgenannten Ansprüche, **dadurch gekennzeichnet, dass** das Schließelement (10), insbesondere die Ventilnadel (13) einen Führungskopf (17) mit einer kugelförmigen Führungsfläche (18) aufweist, wobei das Sperrelement (12) vorzugsweise auf der kugelförmigen Führungsfläche (18) geführt ist, um ein Gegenlager zur Führung in der Kugelpfanne (16) zu bilden.

5. Ventil nach einem der vorgenannten Ansprüche, **dadurch gekennzeichnet, dass** das Schließelement (10) eine Symmetrieachse (19) und das Sperrelement (12) eine Symmetrieachse (20) aufweist, wobei sich das Sperrelement (12) im Öffnungszustand in einer Mittellage befindet und beide Symmetrieachsen (19, 20) wenigstens annähernd ineinander liegen und im Schließzustand einen Winkel zueinander einschließen, wenn das Sperrelement (12) durch die Einwirkung der Schwerkraft aus der Mittellage herausgeführt ist.

6. Ventil nach einem der vorgenannten Ansprüche, **dadurch gekennzeichnet, dass** das Ventil ein Gehäuse (21) aufweist, in dem das Schließelement (10) und das Sperrelement (12) aufgenommen sind, wobei das Festsetzen des Schließelementes (10) im Schließzustand durch eine Anlage des Sperrelementes (12) gegen das Gehäuse (21) in wenigstens einem Anlagepunkt (22) erfolgt.

7. Ventil nach einem der vorgenannten Ansprüche, **dadurch gekennzeichnet, dass** das Schließelement (10) und das Sperrelement (12) eine Einheit mit einem Höhenmaß in Symmetrieachsenrichtung bildet, welches Höhenmaß bei schwerkraftbedingter Auslenkung des Sperrelementes (12) aus der Mittellage größer ist als bei Anordnung des Sperrelementes (12) in Mittellage.

8. Ventil nach einem der vorgenannten Ansprüche, **dadurch gekennzeichnet, dass** das Sperrelement (12) einen Hohlkegel (23) aufweist, durch den sich der Schaftabschnitt (14) erstreckt, sodass das Sperrelement (12) auf dem Schaftabschnitt (14) taumelbeweglich ist.

9. Ventil nach Anspruch 4 bis 8, **dadurch gekennzeichnet, dass** der Führungsteller (15) auf der Ventilnadel (13) aufgeschraubt ist, sodass der Abstand der Kugelpfanne (16) zur Führungsfläche (18) über eine Schraubverstellung (25) des Führungstellers (15) auf der Ventilnadel (13) verstellbar ist.

10. Handgehaltenes Motorgerät mit einem Tank und einem nach einem der Ansprüche 1 bis 9 ausgebildeten Ventil, wobei das Ventil am Tank derart angeordnet ist, dass sich das Sperrelement (12) in der Mittellage befindet, wenn das Motorgerät in einer Neutrallage gehalten ist und wobei das Sperrelement (12) aus der Mittellage heraus gelangt, wenn das Motorgerät die Neutrallage verlässt.

## Claims

1. A valve (100) for aerating and ventilating a tank with a closing element (10) which sits in a sealing manner against a valve seat (11) in a closed state and which is lifted out of the valve seat (11) in an open state, wherein a blocking element (12) is provided which can be moved by means of a force gravity, by means of which the closing element (10) can be fixed at least in the closed state, wherein the blocking element (12) is accommodated in a movable manner on the closing element (10) and wherein the closing element (10) comprises a valve needle (13) which extends through the blocking element (12) by a shank section (14), **characterized in that** the closing element (10) has a guide plate (15) with a ball socket (16), wherein the blocking element (12) is guided in the ball socket (16), by the blocking element (12) having a convex surface section in order to slide in the ball socket (16).

2. The valve according to Claim 1, **characterized in that** the blocking element (12) is guided on the closing element (10), in particular pivotably with a pivoting movement about a pivot point (S) which is fixed with respect to the closing element (10).

3. The valve according to Claim 1 or 2, **characterized in that** the blocking element (12) is embodied in a cone-shaped manner.

4. The valve according to one of the above-mentioned claims, **characterized in that** the closing element (10), in particular the valve needle (13), has a guide head (17) with a spherical guide surface (18), wherein the blocking element (12) is preferably guided on the spherical guide surface (18), in order to form a counter bearing for guiding in the ball socket (16).

5. The valve according to one of the above-mentioned claims, **characterized in that** the closing element (10) has an axis of symmetry (19) and the blocking element (12) has an axis of symmetry (20), wherein the blocking element (12) in the open state is in a centre position and both axes of symmetry (19, 20) are at least approximately located within one another and in form an angle relative to one another the closed state when the blocking element (12) is guided out of the centre position by the effect of the force of gravity.

6. The valve according to one of the above-mentioned claims, **characterized in that** the valve has a housing (21), in which the closing element (10) and the blocking element (12) are accommodated, wherein the fixing of the closing element (10) in the closed state carried out by placing the blocking element (12) against the housing (21) in at least one abutting point (22).

7. The valve according to one of the above-mentioned claims, **characterized in that** the closing element (10) and the blocking element (12) form a unit with a height dimension in a direction of an axis of symmetry, which height dimension is greater in the case of a deflection of the blocking element (12) out of the centre position due to the force of gravity than in the case of an arrangement of the blocking element (12) in the centre position.

8. The valve according to one of the above-mentioned claims, **characterized in that** the blocking element (12) has a hollow cone (23), through which the shank section (14) extends, so that the blocking element (12) is movable on the shank section (14) by means of wobbling.

9. The valve according to Claim 4 to 8, **characterized in that** the guide plate (15) is screwed onto the valve needle (13), so that the distance of the ball socket (16) to the guide surface (18) is adjustable via a screw adjustment (25) of the guide plate (15) on the valve needle (13).

10. A hand-held motor device with a tank and with a valve embodied according to one of Claims 1 to 9, wherein the valve is arranged on the tank such that the blocking element (12) is in the centre position when the motor device is held in a neutral position, and wherein the blocking element (12) comes out from the centre position when the motor device leaves the neutral position.

## Revendications

1. Soupape (100) pour la ventilation et la purge d'un réservoir comprenant un élément de fermeture (10) qui est posé en étanchéité contre un siège de soupape (11) dans un état de fermeture et est soulevé du siège de soupape (11) dans un état d'ouverture, sachant qu'un élément de blocage (12) mobile par gravité est prévu, par lequel l'élément de fermeture (10) peut être mis au moins dans l'état de fermeture, sachant que l'élément de blocage (12) est reçu mobile sur l'élément de fermeture (10) et sachant que l'élément de fermeture (10) comprend une aiguille de soupape (13) qui s'étend à travers l'élément de blocage (12) avec un tronçon de tige (14), **caractérisée en ce que** l'élément de fermeture (10) présente une rondelle de guidage (15) avec un logement sphérique (16), sachant que l'élément de blocage (12) est dirigé dans le logement sphérique (16), **en ce que** l'élément de blocage (12) présente un tronçon de surface convexe pour glisser dans le logement sphérique (16).

2. Soupape selon la revendication 1, **caractérisée en ce que** l'élément de blocage (12) est dirigé sur l'élément de fermeture (10), en particulier pivotant avec un pivotement sur un pivot (S) fixe par rapport à l'élément de fermeture (10).

3. Soupape selon la revendication 1 ou 2, **caractérisée en ce que** l'élément de blocage (12) est conique.

4. Soupape selon l'une des revendications précédentes, **caractérisée en ce que** l'élément de fermeture (10), en particulier l'aiguille de soupape (13), présente une tête de guidage (17) comprenant une surface de guidage sphérique (18), sachant que l'élément de blocage (12) est dirigé de préférence sur la surface de guidage sphérique (18) pour former un contre-appui pour le guidage dans le logement sphérique (16).

5. Soupape selon l'une des revendications précédentes, **caractérisée en ce que** l'élément de fermeture (10) présente un axe de symétrie (19) et que l'élément de blocage (12) présente un axe de symétrie (20), sachant que l'élément de blocage (12) se trouve dans une position centrale dans l'état d'ouverture et que les deux axes de symétrie (19, 20) reposent au moins approximativement l'un dans l'autre et incluent un angle entre eux dans l'état de fermeture lorsque l'élément de blocage (12) est sorti de sa position centrale par l'action de la gravité.

6. Soupape selon l'une des revendications précédentes, **caractérisée en ce que** la soupape présente un logement (21) dans lequel sont reçus l'élément de fermeture (10) et l'élément de blocage (12), sachant que la mise de l'élément de fermeture (10) dans l'état de fermeture s'effectue par un appui de l'élément de blocage (12) contre le logement (21) en au moins un point d'appui (22).

7. Soupape selon l'une des revendications précédentes, **caractérisée en ce que** l'élément de fermeture (10) et l'élément de blocage (12) forment une unité avec une élévation dans le sens des axes de symétrie, laquelle élévation est supérieure quand l'élément de blocage (12) est dévié hors de la position centrale par gravité que quand l'élément de blocage (12) est agencé dans la position centrale.

8. Soupape selon l'une des revendications précédentes, **caractérisée en ce que** l'élément de blocage (12) présente un cône creux (23) à travers lequel le tronçon de tige (14) s'étend, de sorte que l'élément de blocage (12) est mobile en nutation sur le tronçon de tige (14).

9. Soupape selon les revendications 4 à 8, **caractérisée en ce que** la rondelle de guidage (15) est vissée sur l'aiguille de soupape (13), de sorte que la distance du logement sphérique (16) à la surface de guidage (18) est réglable par un vissage (25) de la rondelle de guidage (15) sur l'aiguille de soupape (13).

10. Appareil à moteur à main comprenant un réservoir et une soupape conçue selon l'une des revendications 1 à 9, sachant que la soupape est ainsi agencée sur le réservoir que l'élément de blocage (12) se trouve dans la position centrale lorsque l'appareil à moteur est maintenu dans une position neutre et sachant que l'élément de blocage (12) sort de la position centrale lorsque l'appareil à moteur quitte la position neutre.
